# EUROPÄISCHE PATENTSCHRIFT

(11) **EP 1 253 120 B1**
(45) Veröffentlichungstag und Bekanntmachung des Hinweises auf die Patenterteilung: **18.08.2004**
(21) Anmeldenummer: 02008439.8
(22) Anmeldetag: 13.04.2002
(51) Int. Cl.: C04B 28/26

(54) **Bindemittel für Faserprodukte**
Binder for fibre products
Liant pour produits fibreux

(30) Priorität: 25.04.2001 DE 10120137
(43) Veröffentlichungstag der Anmeldung: 30.10.2002
(73) Patentinhaber: Zschimmer & Schwarz GmbH & Co KG Chemische Fabriken, 56112 Lahnstein (DE)
(72) Erfinder: Quirmbach, Peter, Dr., 56235 Hundsdorf (DE); Martin, Udo, 56112 Lahnstein (DE)
(74) Vertreter: Becker, Thomas U., Dr.

(56) Entgegenhaltungen:
- EP-A- 0 457 516
- DE-U- 9 402 123
- US-A- 3 297 616
- US-A- 3 865 774
- US-A- 4 360 440
- US-A- 5 268 031

## Beschreibung

Die Erfindung betrifft die Verwendung eines Bindemittels für Faserprodukte.

Um Fasern in Faserprodukten untereinander zu verbinden, werden Bindemittel verwendet.

Diese Bindemittel werden in der Regel in flüssiger Form, zum Beispiel durch Sprühen oder in Form eines Schaumes, auf die Fasern aufgebracht. Während eines nachfolgenden Wärmebehandlungsprozesses härtet das Bindemittel aus.

Bisher wurden meist Bindemittel auf der Basis eines Additives aus dem Bereich organischer, etwa wäßriger Phenol-Resol-Zubereitungen, verwendet.

Bei der Verwendung eines solchen Bindemittels ergeben sich zahlreiche Nachteile. So zeigt das abgebundene Bindemittel eine mangelnde Beständigkeit bei tiefen oder hohen Temperaturen, wobei letztere eine häufig nicht zufriedenstellende Feuerbeständigkeit zur Folge hat. Auch können gesundheitsschädliche Bestandteile aus dem Bindemittel entweichen, insbesondere unter Wärmeeinfluß.

Insoweit unterliegt die Verwendung von mit entsprechenden Bindemitteln versehenem Fasermaterial, insbesondere im Bauwesen, Beschränkungen.

US-Patent 3,865,774 offenbart einen Ton, der zu einem porzellanartigen Material aushärtbar ist. Der Ton enthält, neben Anteilen an K₂SiO₃, Polovinylacetatharz und Polovinylalkoholharz, weitere Bestandteile, beispielsweise Tonmineralien wie Al₂O₃, in erheblichen Anteilen.

Im US-Patent 4,360,440 wird ein Verfahren zum Aufbringen einer Isoliermischung auf ein Objekt beschrieben. Die Isoliermischung besteht aus 40% Natriumsilikat und 60% Acrylharz, die im Verhältnis von 1:3,5 mit Wasser gemischt werden.

Der Erfindung liegt die Aufgabe zugrunde, ein Bindemittel für Faserprodukte zur Verfügung zu stellen, das sich durch eine verbesserte Wärmebeständigkeit auszeichnet und in gesundheitlicher Hinsicht unbedenklich ist.

Zur Lösung dieser Aufgabe ist erfindungsgemäß ein Bindemittel mit in seiner allgemeinsten Zusammensetzung folgenden Bestandteilen vorgesehen:
- wenigstens einem wasserlöslichen Silikat,
- wenigstens einer in Wasser dispergierbaren Substanz und
- Wasser.

Als Silikat können ein oder mehrere wasserlösliche Silikate, auch in Verbindung, vorgesehen sein, beispielsweise in Form eines oder mehrerer Alkalisilikate, also etwa Kaliumsilikat oder Natriumsilikat.

Das Molverhältnis der Alkalisilikate, berechnet als Alkalioxid (M₂O) zu Siliziumoxid (SiO₂), kann zwischen 1 : 2 und 1 : 5 liegen, also beispielsweise zwischen 1 2,5 und 1 : 4,5 oder zwischen 1 : 2,8 und 1 : 3,8.

Bei der Verwendung eines oder mehrerer Alkalisilikate als Silikat erhält man eine wäßrige Lösung dieser Silikate im Bindemittel, also etwa eine wäßrige Lösung von Kalium- und/oder Natriumsilikat (Wasserglas).

Für die in Wasser dispergierbaren Substanzen können beispielsweise organische Substanzen vorgesehen sein, die in Wasser als Dispergiermittel dispergierbar sind.

Zahlreiche in Wasser dispergierbare Substanzen können Verwendung finden, zum Beispiel Polyvinylacetat, Polyvinylpropionat oder Polyacrylat. Neben den Homopolymeren dieser Substanzen können Copolymere eingesetzt werden.

Als in Wasser dispergierbare Substanzen können auch Copolymerisate in Form von Acrylsäureester-Styrol-Copolymeren oder Acrylsäureester-Methacrylsäuremethylester-Copolymeren (Äthylacrylat-Methylmethacrylat-Copolymer), alternativ auch mit Styrol, Anwendung finden. Bei letzterem

Copolymer kann es sich um ein (Meth)Acrylsäureester mit Styrol handeln, wobei die Acrylsäure beziehungsweise Methacrylsäure mit kurzkettigen Alkoholen verestert sein kann, beispielsweise mit C1 bis C4-Alkoholen, zum Beispiel Methanol, Ethanol, Propanol oder Butanol.

Sämtliche der vorgenannten, in Wasser dispergierbaren Substanzen können einzeln oder in Kombination im Bindemittel vorliegen.

Die Teilchengröße der dispergierbaren Substanzen kann zwischen 0,01 und 1 µm liegen, beispielsweise zwischen 0,02 und 0,5 µm oder zwischen 0,05 und 0,2 µm.

Der Anteil der Silikate im Bindemittel (letzteres als Summe seiner sämtlichen Bestandteile, also insbesondere wasserlösliche Silikate, in Wasser dispergierbare Substanzen und Wasser) liegt zwischen 20 und 70 Gew.-% oder 40 und 65 Gew.-%.

Der Anteil der in Wasser dispergierbaren Substanzen im Bindemittel liegt zwischen 0,5 und 30 Gew.-%, also beispielsweise zwischen 1 und 25 Gew.-% oder 5 und 25 Gew.-%, jeweils bezogen auf sämtliche Bindemittel-Bestandteile.

Weitere Vorteile sind:
- das Bindemittel ist lagerstabil, da es sehr entmischungsstabil ist,
- das Bindemittel ist frostfest,
- durch das Bindemittel erhält man eine bis etwa 1.000°C stabile, feuerfeste Bindung,
- unter Wärmeeinfluß entweichen aus dem Bindemittel keine toxischen Bestandteile (giftige Gase),
- das Bindemittel härtet bereits bei verhältnismäßig tiefen Temperaturen (< 100°C) aus,
- das Bindemittel weist nach der Trocknung eine hohe Wasserfestigkeit auf.

Nachfolgend werden drei Versatzbeispiele (in Gew.-%) eines anmeldungsgemäßen Bindemittels angegeben.

| Versatzbeispiel A: | |
|---|---|
| 50 % | Kaliumsilikat mit einem Molverhältnis von K₂O zu SiO₂ von 1 : 3,3 |
| 10 % | Acrylsäureester-Styrol-Copolymer |
| 40 % | Wasser. |

| Versatzbeispiel B: | |
|---|---|
| 55 % | Kaliumsilikat mit einem Molverhältnis von K₂O zu SiO₂ von 1 : 3,2 |
| 10 % | Acrylsäureester-Styrol-Copolymer |
| 35 % | Wasser. |

| Versatzbeispiel C: | |
|---|---|
| 60 % | Kaliumsilikat mit einem Molverhältnis von K₂O zu SiO₂ von 1 : 3,4 |
| 10 % | Acrylsäureester-Methacrylsäuremethylester-Copolymer |
| 30 % | Wasser. |

Alle Komponenten werden jeweils homogen vermischt.

Das erfindungsgemäße Bindemittel eignet sich zum Auftragen auf organische Fasern, beispielsweise Zellulose-, Holz-, Flachsoder Wollfasern oder anorganische Fasern, beispielsweise Glasoder Gesteinsfasern.

Es wird auf die Fasern, beispielsweise durch Sprühen oder Tränkung, aufgebracht und in einem anschließenden Wärmebehandlungsprozeß bei Temperaturen beispielsweise zwischen 80 und 150°C, also zum Beispiel bei etwa 100°C, ausgehärtet.

## Patentansprüche

1. Verwendung eines Versatzes aus
a) wenigstens einem wasserlöslichen Silikat mit einem Anteil zwischen 20 und 70 Gew.-%,
b) wenigstens einer in Wasser dispergierbaren Substanz und
c) Wasser
als Bindemittel für Faserprodukte.

2. Verwendung nach Anspruch 1 mit der Maßgabe, dass wenigstens eines der Silikate ein Alkalisilikat ist.

3. Verwendung nach Anspruch 2 mit der Maßgabe, dass wenigstens eines der Alkalisilikate ein Kaliumsilikat ist.

4. Verwendung nach Anspruch 2 mit der Maßgabe, dass das Molverhältnis des Alkalisilikats, berechnet als Alkalioxid (M₂O), zu Siliziumoxid (SiO₂) zwischen 1 : 2 und 1 : 6 liegt.

5. Verwendung nach Anspruch 1 mit der Maßgabe, dass die in Wasser dispergierbare Substanz auf wenigstens einem der folgenden Stoffe basiert:
- Polyvinylacetat,
- Polyvinylpropionat,
- Polyacrylat,
- Acrylsäureester-Styrol-Copolymer,
- Acrylsäureester-Methacrylsäuremethylester-Copolymer.

6. Verwendung nach Anspruch 1 mit der Maßgabe, dass die Teilchengröße der in Wasser dispergierbaren Substanz zwischen 0,01 und 1 µm liegt.

7. Verwendung nach Anspruch 6 mit der Maßgabe, dass die Teilchengröße der in Wasser dispergierbaren Substanz zwischen 0,02 und 0,5 µm liegt.

8. Verwendung nach Anspruch 1 mit der Maßgabe, dass der Anteil der in Wasser dispergierbaren Substanz zwischen 0,5 und 30 Gew.-% liegt.

## Claims

1. A use of a mixture of
a) at least one water-soluble silicate in a proportion of 20 to 70 % by wt.,
b) at least one substance dispersible in water and
c) water
as a binder for fibre products.

2. The use according to claim 1 with the proviso that at least one of the silicates is an alkali silicate.

3. The use according to claim 2 with the proviso that at least one of the alkali silicates is a potassium silicate.

4. The use according to claim 2 with the proviso that the molar ratio of the alkali silicate, calculated as alkali oxide (M₂O), to silica (SiO₂) is between 1 : 2 and 1 : 6.

5. The use according to claim 1 with the proviso that the substance dispersible in water is based on at least one of the following substances:
- polyvinyl acetate,
- polyvinyl propionate,
- polyacrylate,
- acrylic acid ester-styrene copolymer,
- acrylic acid ester-methacrylic acid methyl ester copolymer.

6. The use according to claim 1 with the proviso that the particle size of the substance dispersible in water is between 0.01 and 1 µm.

7. The use according to claim 6 with the proviso that the particle size of the substance dispersible in water is between 0.02 and 0.5 µm.

8. The use according to claim 1 with the proviso that the proportion of the substance dispersible in water is between 0.5 and 30 % by wt.

## Revendications

1. Utilisation d'un mélange se composant
a) d'au moins un silicate hydrosoluble en une proportion comprise entre 20 et 70 % en poids,
b) d'au moins une substance pouvant être dispersée dans l'eau et
c) d'eau
en tant que liant pour des produits fibreux.

2. Utilisation selon la revendication 1, à condition qu'au moins l'un des silicates soit un silicate alcalin.

3. Utilisation selon la revendication 2, à condition qu'au moins l'un des silicates soit un silicate de potassium.

4. Utilisation selon la revendication 2, à condition que le rapport molaire entre le silicate alcalin, calculé en tant qu'oxyde alcalin (M₂O), et l'oxyde de silicium (SiO₂) soit compris entre 1 : 2 et 1 : 6.

5. Utilisation selon la revendication 1, à condition que la substance pouvant être dispersée dans l'eau soit basée sur au moins l'une des substances suivantes :
- acétate de polyvinyle,
- propionate de polyvinyle,
- polyacrylate,
- copolymère ester acrylique-styrène,
- copolymère ester acrylique-méthacrylate de méthyle.

6. Utilisation selon la revendication 1, à condition que la taille des particules de la substance pouvant être dispersée dans l'eau soit comprise entre 0,01 et 1 µm.

7. Utilisation selon la revendication 6, à condition que la taille des particules de la substance pouvant être dispersée dans l'eau soit comprise entre 0,02 et 0,5 µm.

8. Utilisation selon la revendication 1, à condition que la proportion de la substance pouvant être dispersée dans l'eau soit comprise entre 0,5 et 30 % en poids.
